# FASCICULE DE BREVET EUROPEEN

(11) **EP 4 240 981 B1**
(45) Date de publication et mention de la délivrance du brevet: **29.04.2026**
(21) Numéro de dépôt: 21802722.5
(22) Date de dépôt: 03.11.2021
(51) Int. Cl.: F16B 19/06, F16B 19/10, F16F 15/12, F16F 15/14

(54) **ENSEMBLE COMPORTANT UN RIVET**
ANORDNUNG MIT EINER NIETE
ASSEMBLY COMPRISING A RIVET

(30) Priorité: 05.11.2020 FR 2011366
(43) Date de publication de la demande: 13.09.2023
(73) Titulaire: VALEO EMBRAYAGES, 80009 Amiens (FR)
(72) Inventeur: LAPORTE, Benjamin, 12084 MONDOVI (IT); LANFRANCO, Gianbattista, 12084 MONDOVI (IT)
(74) Mandataire: Valeo Powertrain Systems
(86) Numéro de dépôt international: PCT/EP2021/080565
(87) Numéro de publication internationale: WO 2022/096537

(56) Documents cités:
- EP-A1- 2 705 275
- DE-A1- 102014 216 752
- DE-A1- 102019 110 806
- US-A1- 2015 219 196
- US-A1- 2019 360 521

## Description

La présente invention se rapporte aux éléments de fixation et plus spécifiquement aux rivets, aux ensembles comprenant de tels rivets et à un procédé de fabrication de tels ensembles.

Les rivets sont couramment utilisés comme élément de fixation pour fixer entre elles des pièces différentes. Les rivets sont des éléments d'assemblage et de fixation permanents. Ils permettent à un utilisateur de solidariser facilement entre elles des pièces différentes.

Les rivets se présentent généralement sous la forme d'une tige cylindrique, généralement métallique, pleine ou creuse. L'une des extrémités du rivet est munie d'une tête, c'est-à-dire une partie de section plus grande. L'autre extrémité sera aplatie et élargie par écrasement, pour solidariser les éléments qu'on veut riveter ensemble. C'est le rivetage.

Le document DE 10 2019 110 806 A1 divulgue un ensemble comportant un rivet selon l'art antérieur.

Les pièces que l'on souhaite solidariser entre elles, par exemple deux plaques, ont chacune été percées au préalable d'un trou permettant à la tige du rivet de traverser l'une et l'autre.

Il existe également des rivets se présentant sous la forme d'une tige cylindrique dont les deux extrémités seront aplaties et élargies par écrasement. C'est le double rivetage.

Le double rivetage permet, par rapport au simple rivetage, une fixation optimisée sur les deux extrémités du rivet en supprimant au maximum les jeux entre le rivet et les pièces qui sont solidarisées entre elle par ledit rivet.

Le double rivetage présente l'inconvénient d'une mise en place plus longue, par la déformation des deux extrémités de sa tige, entrainant un risque accru d'erreur, de mauvais positionnement et/ou de malformation. En outre, les trous réalisés sur les pièces à solidariser entre elles adaptés pour accueillir le rivet doivent présenter une forme particulière (conique) plus compliquée et coûteux à réaliser.

Un but de l'invention est de proposer un ensemble de deux éléments et comprenant un rivet permettant une fixation optimale de ces deux éléments comme le double rivetage sans ses inconvénients.

A cet effet, l'invention propose un ensemble, notamment un corps pendulaire pour un dispositif d'amortissement pendulaire destiné à équiper une transmission d'un véhicule, avant montage, comprenant:
- un premier élément présentant un premier évidement avec un sixième diamètre,
- un troisième élément présentant un troisième évidement avec un huitième diamètre, le huitième diamètre étant identique au sixième diamètre du premier évidement du premier élément
- un rivet s'étendant axialement entre une tête et un pied et comprenant un corps situé axialement entre la tête et le pied,
ledit corps du rivet comprenant une première portion, présentant un premier diamètre, et une deuxième portion, présentant un deuxième diamètre inférieur au premier diamètre, et dans lequel le premier diamètre de la première portion du corps du rivet est égale au sixième diamètre du premier évidement du premier élément.

Ainsi, le double diamètre du corps du rivet de l'ensemble selon l'invention permet à la fois une insertion facile du rivet dans le premier et le deuxième évidement, respectivement du premier et du deuxième élément de l'ensemble par le côté du corps du rivet présentant le diamètre le plus faible, i.e. le deuxième diamètre, et à la fois une insertion sans jeu ou avec un faible jeu dans le premier évidement du premier élément, afin d'optimiser la liaison entre le rivet et le premier élément sans déformation ultérieur du rivet, par le diamètre le plus important, i.e. le premier diamètre. Cette double fonction est assurée sans déformation supplémentaire du rivet. L'assemblage du rivet est ainsi optimisé sans augmentation du temps d'assemblage ni contrainte supplémentaire sur les éléments à assemblé par rapport à un rivet classique. L'évidement des deux éléments de l'ensemble sont identiques. Les deux éléments de l'ensemble sont identiques.

Un rivet peut encore comporter une ou plusieurs des caractéristiques optionnelles suivantes ou un rivet de l'ensemble selon l'invention peut encore comporter une ou plusieurs des caractéristiques optionnelles suivantes :
le rivet est de type plein ou semi-forêt ;
le pied est adapté pour être déformé ; Ainsi le rivetage, notamment à froid, est facilité ;
la tête présente un quatrième diamètre supérieur au premier diamètre ; Ainsi, la tête permet de contrôler le positionnement du rivet avant le rivetage ce qui facilite son utilisation ;
la première portion est axialement au contact de la tête et la deuxième portion est axialement au contact du pied ; Ainsi, l'insertion du rivet dans des éléments à solidariser entre eux est facilité ;
la première portion est axialement au contact du pied et la deuxième portion est axialement au contact de la tête ; Ainsi, la désolidarisation d'un ou de plusieurs éléments déjà insérés sur le rivet est limitée avant même la déformation du pied dudit rivet ;
le corps comprend deux deuxième portions, la première portion étant située axialement entre les deux deuxième portions ; cette forme de rivet peut être adaptée à certain environnement ;
le premier diamètre est continu ; Ainsi, le rivet est plus simple et moins coûteux à produire et facilite le montage ;
le deuxième diamètre est continu ; Ainsi, le rivet est plus simple et moins coûteux à produire et facilite le montage ;
le corps comprend en outre une portion intermédiaire située axialement entre la première portion et la deuxième portion, la portion intermédiaire présentant un troisième diamètre compris entre le deuxième diamètre et le premier diamètre ; le troisième diamètre est inférieur au première diamètre et est supérieur au deuxième diamètre ; La portion intermédiaire permet de faciliter l'insertion, par exemple par emmanchement, de la première portion dans un évidement ;
le troisième diamètre est décroissant ; Ainsi, la transition entre le premier diamètre et le deuxième diamètre est lissée ce qui permet de faciliter l'insertion de la première portion ;
le pied présente un cinquième diamètre inférieur ou égal au deuxième diamètre ; le pied facilite l'insertion du rivet dans les évidements ;
la première portion du corps comprend une cannelure ; la présence d'une ou de plusieurs cannelures sur la première portion du corps permet d'obtenir des déformations localisées de ladite première portion sur les bords de la ou des cannelures ; Ces déformations localisées permettent d'augmenter localement le diamètre de la première portion afin de réduire le jeu entre un évidement dans lequel est introduit le rivet sans augmenter les efforts nécessaires à ladite insertion dans l'évidement ; ainsi la ou les cannelure permettent une déformation localisée lors de l'assemblage du rivet afin de faciliter celui-ci ;
la cannelure s'étend axialement ; L'assemblage du rivet est optimisé ;

L'ensemble selon l'invention peut encore comporter une ou plusieurs des caractéristiques optionnelles suivantes :

Le rivet et le premier élément forme un ensemble qui peut être préassemblé. Le rivet est rigidement solidaire du premier élément sans déformation du rivet. La création de cet ensemble en amont permet de réduire les étapes sur une chaine de montage d'ensemble plus complexe.
le premier évidement présente une forme cylindrique ; ainsi le premier évidement est simple et rapide à usiner ;
le premier élément est une première masse du corps pendulaire ;
le premier diamètre de la première portion du corps du rivet est égale au sixième diamètre du premier évidement du premier élément à +/-0.05 millimètres (mm) ;
l'ensemble comprend en outre un deuxième élément présentant un deuxième évidement avec un septième diamètre, le deuxième diamètre de la deuxième portion du corps du rivet étant inférieur audit septième diamètre ; l'insertion du rivet dans le deuxième évidement pratiqué dans le deuxième élément est facilité ;
le deuxième évidement présente une forme cylindrique ; ainsi le deuxième évidement est simple et rapide à usiner ;
le deuxième diamètre de la deuxième portion du corps du rivet est inférieur au septième diamètre du deuxième évidement à +/-0,2 millimètres (mm) ;
le deuxième élément est un organe de liaison du corps pendulaire ;
le rivet est adapté pour apparier le premier élément au deuxième élément ;
l'ensemble comprend en outre un troisième élément présentant un troisième évidement avec un huitième diamètre, le huitième diamètre étant identique au sixième diamètre du premier évidement du premier élément ; ainsi l'insertion du rivet dans le troisième évidement pratiqué dans le troisième élément est facilité et les évidements du premier et du troisième éléments sont réalisés simultanément afin de réduire les coûts de fabrication ;
le premier élément est identique au troisième élément ; ainsi lesdits éléments sont interchangeables ce qui en réduit le coût, limite le nombre de référence nécessaire et réduit les erreurs lors du montage de l'ensemble ;
le troisième évidement présente une forme cylindrique ; ainsi le troisième évidement est simple et rapide à usiner ;
le troisième élément est une deuxième masse du corps pendulaire ;
le rivet est adapté pour apparier le premier élément, et optionnellement le deuxième élément, au troisième élément ;

Ou encore, l'invention a pour objet un procédé de fabrication d'un ensemble selon l'invention comprenant les étapes suivantes :
- Amener un premier élément présentant un premier évidement avec un sixième diamètre,
- Amener un rivet s'étendant axialement entre une tête et un pied et comprenant un corps situé axialement entre la tête et le pied, ledit corps comprenant une première portion présentant un premier diamètre, le premier diamètre étant égale audit sixième diamètre, et une deuxième portion présentant un deuxième diamètre inférieur au premier diamètre,
- Apparier le premier élément au rivet en insérant la première portion du corps dudit rivet dans le premier évidement dudit premier élément
- Amener un troisième élément présentant un troisième évidement avec un huitième diamètre identique au sixième diamètre du premier évidement du premier élément,
- Insérer la deuxième portion du corps du rivet dans le troisième évidement,
- Déformer le pied du rivet pour apparier le premier élément au troisième élément de sorte que la deuxième portion du corps du rivet se déforme pour remplir le troisième évidement.

Un procédé selon l'invention peut encore comporter une ou plusieurs des étapes optionnelles suivantes :
entre la troisième étape et la quatrième étape précédente, les étapes consistant à :
- Amener un deuxième élément présentant un deuxième évidement avec un septième diamètre inférieur au deuxième diamètre de la deuxième portion du corps du rivet,
- Insérer la deuxième portion du corps du rivet dans le deuxième évidement,
- La dernière étape de déformation du pied du rivet consistant à déformer le pied du rivet pour apparier le premier élément au deuxième élément et au troisième élément de sorte que la deuxième portion du corps du rivet se déforme pour remplir le deuxième évidement et le troisième évidement ;
- dans lequel le premier élément est une première masse oscillante et le troisième élément est une deuxième masse oscillante d'un corps pendulaire d'un dispositif d'amortissement pendulaire, notamment destiné à équiper une transmission d'un véhicule ;
- le deuxième élément est un organe de liaison appartenant au corps pendulaire adapté pour apparier la première masse oscillante à la deuxième masse oscillante.

D'autres caractéristiques et avantages de l'invention apparaîtront encore à la lecture de la description qui va suivre et à l'examen du dessin annexé dans lequel :
la figure 1 représente un rivet vue de profil ;
la figure 2 est une en perspective du rivet comprenant des cannelures
la figure 3 est une vue schématique d'un double rivet,
la figure 4 est une vue schématique du rivet selon une première alternative,
la figure 5 est une vue schématique du rivet selon une deuxième alternative,
la figure 6 est une vue partielle en coupe d'un double volant amortisseur comprenant un rivet,
la figure 7 est une vue en perspective d'un dispositif d'amortissement pendulaire comprenant des rivets;
la figure 8 une vue en perspective d'un sous-ensemble adapté pour former un corps pendulaire qui illustre l'étape d'assemblage de la première masse oscillante aux rivets ;
la figure 9 est une vue en coupe de côté selon l'axe V-V représenté sur la figure 8 ;
la figure 10 et la figure 11 sont des vues partielles de face du dispositif d'amortissement pendulaire de la figure 7 illustrant des étapes d'assemblage dudit dispositif d'amortissement pendulaire ;
la figure 12 est une vue en coupe de côté selon l'axe VIII-VIII représenté sur la figure 7, sans l'organe de roulement ;

Sur les différentes figures, des références identiques sont utilisées pour désigner des organes identiques ou analogues.

Définitions : Sauf indication contraire, « axialement » signifie « parallèlement à l'axe longitudinal U du rivet » ; « radialement » signifie « selon un axe transversal coupant l'axe X de rotation du support » ; « angulairement » ou « circonférentiellement » signifient « autour de l'axe de rotation du support ».

L'épaisseur est mesurée selon l'axe de rotation X.

Par « appui centrifuge », on entend une force d'appui comportant une composante orientée à l'écart de l'axe de rotation X

Par « véhicule», on entend les véhicules automobiles, qui comprennent non seulement les véhicules passagers mais également les véhicules industriels, ce qui comprend notamment les poids lourds, les véhicules de transport en commun ou les véhicules agricoles, mais également tout engin de transport permettant de faire passer d'un point à un autre un être vivant et/ou un objet.

Par « corps pendulaire », on entend une masse qui est montée de manière à osciller sur le support en réponse aux acyclismes du moteur du véhicule. Un corps pendulaire est classiquement constitué par une paire de masses oscillantes, ou « masses pendulaires », s'étendant de manière à prendre en sandwich le support et rigidement solidaires entre elles. Un corps pendulaire comprend en outre au moins un organe de liaison, encore appelé entretoise, adapté pour appairer entre elles la paire de masses oscillantes. Un corps pendulaire peut être également constitué par une masse oscillante unique. La masse oscillante unique peut être prise en sandwich entre deux supports.

Deux pièces sont dites « rigidement solidaires » ou « appariées » lorsqu'elles sont en permanence immobilisées l'une par rapport à l'autre. Cette immobilisation peut résulter d'une fixation de la première pièce sur la deuxième pièce directement ou par l'intermédiaire d'une ou plusieurs pièces intermédiaires.

La position de repos du dispositif est celle dans laquelle les corps pendulaires sont soumis à une force centrifuge, mais non à des oscillations de torsion provenant des acyclisme s du moteur thermique.

Les corps pendulaires sont dits « supportés par la force centrifuge » lorsque la vitesse de rotation du support est suffisante pour maintenir les corps pendulaires plaqués radialement vers l'extérieur contre les organes de roulement, et par leur intermédiaire contre le support.

Sauf indication contraire, les verbes « comporter », « présenter » ou « comprendre » doivent être interprétés de manière large, c'est-à-dire non limitative.

Une valeur inférieure, ou supérieure, à une autre est une valeur strictement inférieure, ou supérieure, à cette autre valeur.

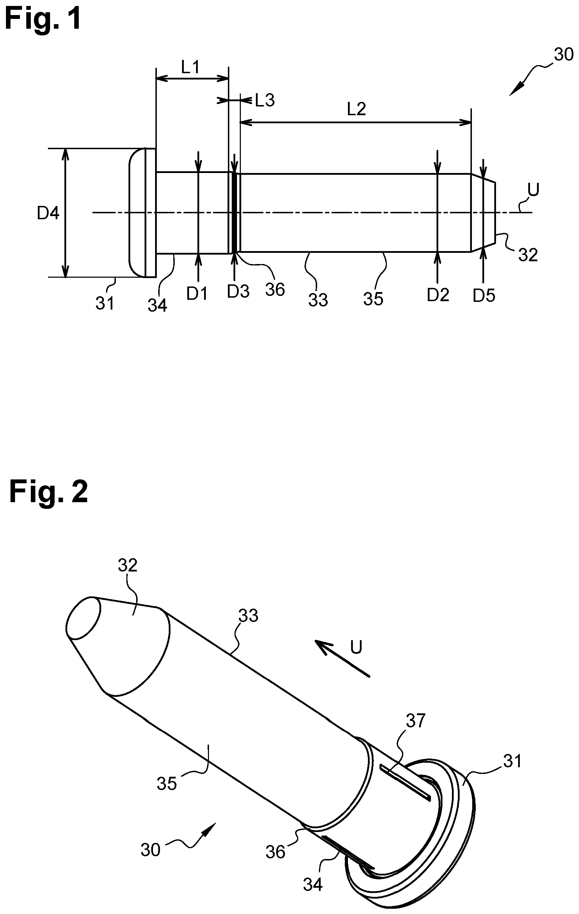

Un rivet 30, comme représenté sur la figure 1, est particulièrement adapté pour solidariser entre eux des éléments et d'assurer une fixation optimale entre lesdits éléments.

Le rivet 30 peut être plein ou semi-forêt.

Le rivet 30 peut s'étendre selon un axe longitudinal U entre une tête 31 et un pied 32. Le rivet 30 peut s'étendre intégralement entre la tête 31 et le pied 32.

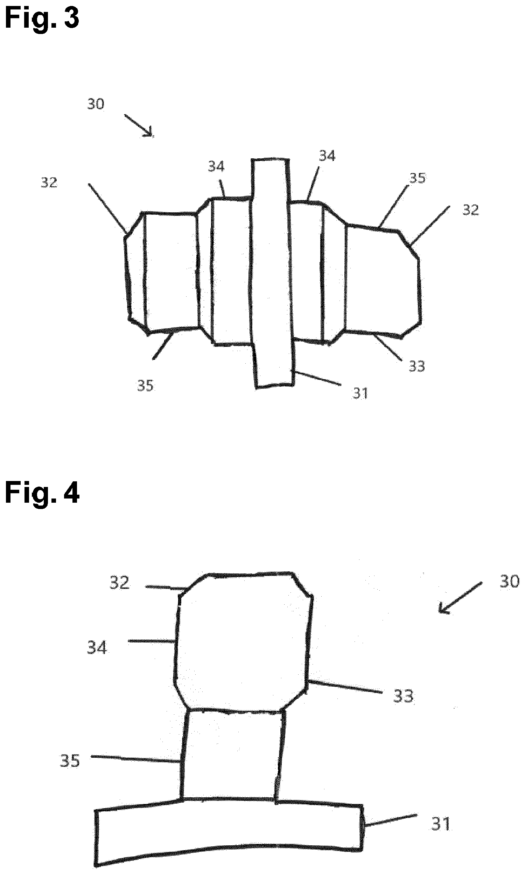

Alternativement, le rivet 30 peut comprendre un deuxième pied 32 comme visible sur la figure 3. Le rivet 30 peut s'étendre intégralement entre les deux pieds 32. La tête 31 peut être située axialement entre les deux pieds 32. Ainsi, un même rivet 30 peut rigidement solidariser plusieurs ensembles d'éléments entre eux.

Le rivet 30 peut en outre comprendre un corps 33 situé axialement, i.e. selon la direction longitudinale U, entre la tête 31 et le pied 32. Le corps 33 peut être divisé en au moins deux portions. Une première portion 34 et une deuxième portion 35.

La première portion 34 peut être situé axialement, i.e. selon la direction longitudinale U, au contact de la tête 31. Alternativement, la première portion 34 peut être située axialement au contact du pied 32, comme par exemple visible sur la figure 4. La première portion 34 peut être cylindrique. La première portion 34 peut présenter un premier diamètre D1. Le premier diamètre D1 peut être continu sur l'ensemble de la première portion 34. La première portion 34 peut présenter une première longueur axiale L1.

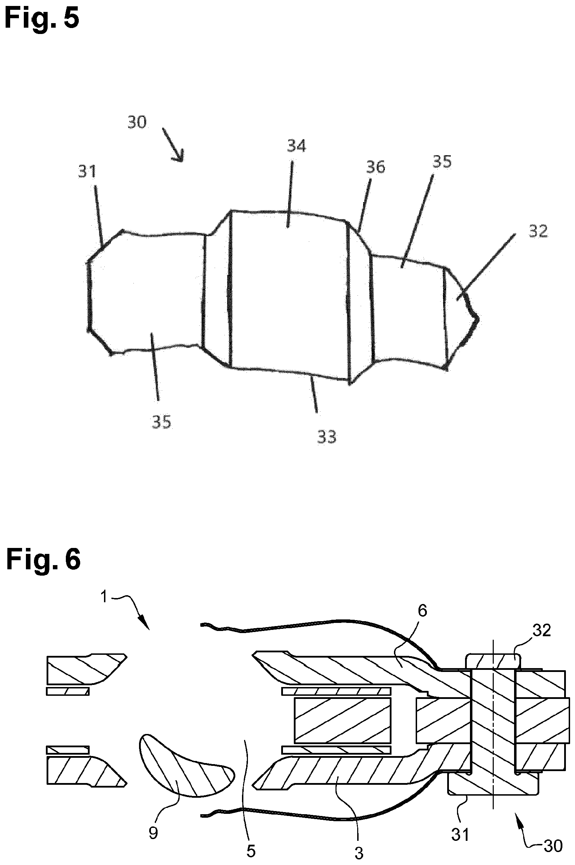

Alternativement, le corps 33 peut être divisé en trois portions ; une unique première portion 34 et deux deuxième portion 35, comme visible sur la figure 5. La première portion 34 peut être située axialement entre les deux deuxième portions 35. La première deuxième portion peut être axialement en contact avec la tête 31 et la deuxième deuxième portion peut être axialement en contact avec le pied 32.

La première portion 34 peut comprendre au moins une cannelure 37. L'au moins une cannelure 37 peut s'étendre selon la direction longitudinale U. L'au moins une cannelure 37 peut présenter une longueur axiale inférieure à la première longueur axiale L1 de la première portion 34.

La formation d'une cannelure 37 permet d'obtenir des déformations localisées de la première portion 34 du corps 33 du rivet 30 sur les bords de ladite cannelure 37. Ces déformations localisées peuvent former des rainures s'étendant le long des bords de la cannelure 37. Ces nervures permettent d'augmenter localement le diamètre de la première portion 34. L'augmentation local du diamètre permet de réduire, et de préférence de supprimer, le jeu entre un évidement dans lequel est introduit le rivet 30 tout en limitant les efforts nécessaires à ladite insertion. La cannelure 37 peut être réalisée par un usinage. L'usinage de la cannelure permet la mise en place d'un procédé ne nécessitant pas une grande précision et donc peu coûteux.

La totalité de la première portion 34 est comprise dans le premier diamètre D1. C'est-à-dire que lorsque le rivet 30 comprend une cannelure 37, le sommet des nervures issues de la réalisation de cette cannelure 37 est compris dans le premier diamètre D1.

De préférence, la première portion 34 peut comprendre une pluralité de cannelures 37. Les cannelures 37 peuvent être équi-réparties sur la surface extérieure de la première portion 34.

La deuxième portion 35 peut être situé axialement, i.e. selon la direction longitudinale U, au contact du pied 32. Alternativement, la deuxième portion 35 peut être située axialement au contact de la tête 31. La deuxième portion 35 peut être cylindrique. La deuxième portion 35 présente un deuxième diamètre D2. Le deuxième diamètre D2 peut être continu sur l'ensemble de la deuxième portion 35. Le deuxième diamètre D2 est inférieur au premier diamètre D1. La deuxième portion 35 peut présenter une deuxième longueur axiale L2. La première longueur axiale L1 peut être inférieure à la deuxième longueur axiale L2. La première longueur axiale L1 peut être au moins deux fois inférieure à la deuxième longueur axiale L2 et de préférence au moins trois fois inférieure à la deuxième longueur axiale L2.

La deuxième portion 35 peut comprendre une ou une pluralité de cannelures 37.

Le corps 33 peut en outre comprendre une portion intermédiaire 36. La portion intermédiaire 36 peut être située axialement, i.e. selon une direction parallèle à l'axe longitudinale U, entre la première portion 34 et la deuxième portion 35. La portion intermédiaire 36 peut présenter un troisième diamètre D3. Le troisième diamètre D3 est inférieur au premier diamètre D1. Le troisième diamètre D3 est supérieur au deuxième diamètre D2. La portion intermédiaire 36 peut présenter une troisième longueur axiale L3. La troisième longueur axiale L3 peut être inférieure à la première longueur axiale L1 et à la deuxième longueur axiale L2. La troisième longueur axiale L3 peut être au moins trois fois inférieur à la première longueur axiale L1.

La portion intermédiaire 36 peut être cylindrique. Le troisième diamètre D3 peut être continu sur l'ensemble de la portion intermédiaire 36. Alternativement, la portion intermédiaire 36 peut présenter la forme d'une portion de cône. Le troisième diamètre D3 peut être décroissant sur l'ensemble de portion intermédiaire 36.

La tête 31 du rivet 30 peut être cylindrique. La tête 31 peut présenter un quatrième diamètre D4. Le quatrième diamètre D4 peut être supérieur au premier diamètre D1.

Alternativement, le quatrième diamètre D4 de la tête 31 peut être égale au premier diamètre D1, la tête 31 peut être confondue avec la première portion 34 du corps 33.

Alternativement, le quatrième diamètre D4 de la tête 31 peut être égale au deuxième diamètre D2, la tête 31 peut être confondue avec la deuxième portion 35 du corps 33.

Le pied 32 peut présenter un cinquième diamètre D5. Le cinquième diamètre D5 peut être inférieur ou égal au deuxième diamètre D2. Le pied 32 du rivet 30 peut être cylindrique. Le cinquième diamètre D5 peut être continu sur l'ensemble du pied 32. Alternativement, le pied 32 peut présenter la forme d'une portion de cône. Le cinquième diamètre D5 peut être décroissant sur l'ensemble du pied 32.

Alternativement, le cinquième diamètre D5 du pied 32 peut être égale au premier diamètre D1, le pied 32 peut être confondue avec la première portion 34 du corps 33.

Alternativement, le cinquième diamètre D5 du pied 32 peut être égale au deuxième diamètre D2, le pied 32 peut être confondue avec la deuxième portion 35 du corps 33.

Le pied 32 peut être adapté pour être déformé afin de finaliser la fixation d'au moins deux éléments d'un ensemble.

Le rivet 30 décrit ci-avant est un rivet avant montage. C'est-à-dire qu'il n'a pas encore subi de déformation pour assurer sa fonction d'organe de fixation.

Le rivet 30 peut être adapté pour solidariser entre eux des éléments appartenant à un ensemble. L'ensemble comprend

au moins deux éléments, un premier élément et un deuxième élément. L'ensemble peut comprendre au moins un troisième élément. Le premier élément, le deuxième élément et le troisième élément peuvent être des éléments quelconques à assembler entre eux tel que par exemple des plaques. Le rivet 30 peut lui-même appartenir à cet ensemble

Le rivet 30 et le premier élément peuvent former un sous-ensemble 40.

L'ensemble peut appartenir à un amortisseur symétrique.

L'ensemble peut appartenir à un double volant amortisseur. De façon connue, le double volant amortisseur 1 comprend un volant primaire 3. Le volant primaire 3 comprend un flasque solidaire d'une couronne de démarreur. Le flasque et la couronne de démarreur sont solidaire l'un à l'autre à leur périphérie radialement externe de manière à délimiter au moins partiellement un volume interne 5. Des organes de rappel élastiques 9, par exemple courbes tels que des ressorts à spires hélicoïdales, peuvent être montés dans ledit volume interne 5.

Les organes de rappel élastiques 9 s'étendent circonférentiellement et prennent appui, à une première extrémité, sur le flasque et/ou la couronne de démarreur et, à une seconde extrémité, sur un voile 4 pouvant appartenir à un volant secondaire 6.

Les organes de rappel élastiques 9 permettent d'établir un mouvement de rotation d'amplitude limitée du volant secondaire 6 par rapport au volant primaire 3, autour d'un axe de rotation. Le premier élément, le deuxième élément et le troisième élément peuvent être respectivement choisis parmi le volant primaire 3, le voile 4 et le volant secondaire 6, comme visible sur la figure 6.

L'ensemble, dans l'exemple qui va être décrit ci-après, peut être un corps pendulaire 13 d'un dispositif 10 d'amortissement pendulaire. Le premier élément peut être une première masse oscillante 14 appartenant audit corps pendulaire 13. Le deuxième élément peut être un organe de liaison appartenant audit corps pendulaire 13 et le troisième élément peut être une deuxième masse oscillante 14 appartenant audit corps pendulaire 13. La première portion 34 du corps 33 du rivet 30 est axialement au contact de la tête 31 et la deuxième portion 35 du corps 33 du rivet 30 est axialement au contact du pied 32.

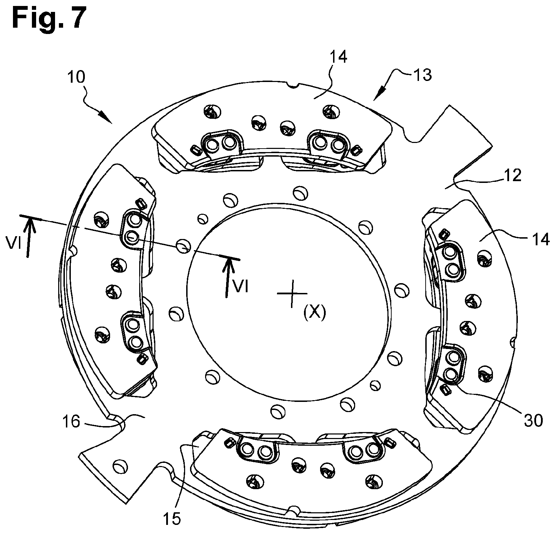

Comme représenté sur la figure 7, un dispositif 10 d'amortissement pendulaire, notamment apte à équiper un système de transmission de véhicule, peut être intégré à un composant d'un tel système de transmission, ce composant étant par exemple un double volant amortisseur.

Ce composant peut faire partie d'un groupe motopropulseur d'un véhicule, ce dernier pouvant comprendre un moteur thermique ayant un nombre prédéterminé de cylindres, par exemple trois, quatre ou six cylindres.

Le dispositif 10 d'amortissement pendulaire comporte au moins un corps pendulaire 13 monté sur un support 12 mobile en rotation autour d'un axe X de rotation. Le dispositif 10 comprend de préférence une pluralité de corps pendulaires 13 montés sur le support 12. Chaque corps pendulaire 13 comprend au moins une masse oscillante 14.

De préférence, chaque corps pendulaire 13 comprend une première et une deuxième masses oscillantes 14 appariées au moyen d'au moins un organe de liaison communément appelé « entretoise » 20. Chaque corps pendulaire 13 peut comprendre une unique entretoise. Alternativement, chaque corps pendulaire 13 comprend deux entretoises 20.

Chaque entretoise 20 peut être rivetée au moyen d'au moins un rivet 30 aux masses oscillante 14 d'un même corps pendulaire 13. Ainsi, le rivet 30 est adapté pour apparier l'entretoise 20, la première masse oscillante 14 et la deuxième masse oscillante 14 ensemble.

Chacune entretoise 20 peut comprendre un corps principal qui s'étend radialement et circonférentiellement, et est de forme générale arquée. Le corps principal s'étend radialement entre une face supérieure 21 radialement externe et une face inférieure 22 radialement interne. Le corps principal s'étend circonférentiellement entre une première extrémité circonférentielle et une deuxième extrémité circonférentielle.

Le corps principal de l'entretoise 20 peut comprendre au moins un deuxième évidement 202. Le deuxième évidement 202 est adapté pour le passage du rivet 30. Le deuxième évidement 202 peut être cylindrique. Le deuxième évidement 202 peut être traversant. Le deuxième évidement 202 peut présenter un septième diamètre D7. Le septième diamètre D7 peut être continu sur l'ensemble du deuxième évidement 202. Le septième diamètre D7 peut être supérieur au deuxième diamètre D2 de la deuxième portion 35 du rivet 30. Le septième diamètre D7 peut être supérieur au deuxième diamètre D2 de la deuxième portion 35 du rivet 30 avec une tolérance de 0.2 mm.

Le corps principal de l'entretoise 20 peut comprendre une pluralité de deuxième évidement 202. Chacun des deuxièmes évidements 202 est adapté pour le passage d'un rivet 30. De préférence, l'entretoise 20 comprend deux deuxièmes évidements 202 lorsque le corps pendulaire 13 comprend deux entretoises 20 et comprend quatre deuxièmes évidements 202 lorsque le corps pendulaire 13 comprend une unique entretoise.

Chacune des première et deuxième masses oscillantes 14 comprend un corps principal qui s'étend radialement et circonférentiellement, et est de forme générale arquée. Les masses oscillantes 14 sont situées de part et d'autre du support 12 et sont axialement en regard selon une direction parallèle à l'axe X de rotation du support 12.

Le corps principal de la première masse oscillante 14 peut comprendre au moins un premier évidement 141. Le premier évidement 141 est adapté pour le passage du rivet 30. Le premier évidement 141 peut être cylindrique. Le premier évidement 141 peut être traversant. Le premier évidement 141 peut présenter un sixième diamètre D6. Le sixième diamètre D6 peut être continu sur l'ensemble du premier évidement 141. Le sixième diamètre D6 peut être égale au premier diamètre D1 de la première portion 34 du rivet 30. Le sixième diamètre D6 est égale au premier diamètre D1 de la première portion 34 du rivet 30 avec une tolérance de 0.05 mm.

Le corps principal de la première masse oscillante 14 peut comprendre une pluralité de premier évidement 141. Chacun des premiers évidements 141 est adapté pour le passage d'un rivet 30. De préférence, la première masse oscillante 14 comprend autant de premiers évidements 141 que le corps pendulaire 13 comprend de rivet 30.

Le corps principal de la deuxième masse oscillante 14 peut comprendre au moins un troisième évidement 143. Le troisième évidement 143 est adapté pour le passage du rivet 30. Le troisième évidement 143 peut être cylindrique. Le troisième évidement 143 peut être traversant. Le troisième évidement 143 peut présenter un huitième diamètre D8. Le huitième diamètre D8 peut être continu sur l'ensemble du troisième évidement 143. Le huitième diamètre D8 est identique au sixième diamètre D6 de la première masse oscillante 14. Le huitième diamètre D8 peut être supérieur au deuxième diamètre D2 de la deuxième portion 35 du rivet 30.

Le corps principal de la deuxième masse oscillante 14 peut comprendre une pluralité de troisième évidement 143. Chacun des troisièmes évidements 143 est adapté pour le passage d'un rivet 30. De préférence, la deuxième masse oscillante 14 comprend autant de troisièmes évidements 143 que le corps pendulaire 13 comprend de rivet 30.

Le septième diamètre D7 du deuxième évidement 202 de l'entretoise 20 peut être identique au sixième diamètre D6 du premier évidement 141 de la première masse oscillante 14 et au huitième diamètre D8 du troisième évidement 143 de la deuxième masse oscillante. Ainsi, un même outillage permet de réaliser les premier, deuxième et troisième évidements.

Le support 12 peut être un élément d'entrée de l'amortisseur de torsion, un élément de sortie ou un élément de phasage intermédiaire disposé entre deux séries de ressort de l'amortisseur, ou un élément lié en rotation à un des éléments précités et distinct de ces derniers, étant alors par exemple un support propre au dispositif 10.

Le support 12 du dispositif 10 d'amortissement pendulaire peut alors être l'un parmi une rondelle de guidage du composant, une rondelle de phasage du composant, ou un support distinct dudit voile, de ladite rondelle de guidage et de ladite rondelle de phasage.

Dans le cas où le dispositif est intégré à un volant solidaire du vilebrequin, le support peut être solidaire de ce volant.

Le support 12 peut encore être autre, tel qu'un flasque.

Dans l'exemple considéré, le support 12 présente globalement une forme d'anneau constitué par une tôle métallique découpée, généralement en acier, d'une épaisseur typiquement inférieure à 10 mm (millimètres), de préférence inférieure à 6 mm, de préférence inférieure à 5 mm.

Le support 12 s'étend axialement, selon une direction parallèle à l'axe X de rotation, entre deux faces latérales 16 opposées. Les deux faces latérales 16 peuvent être planes. Les deux faces latérales 16 peuvent s'étendre entre un bord radialement intérieur et un bord radialement extérieur. Le bord radialement intérieur peut être classiquement de forme circulaire.

Au moins une fenêtre 15 traverse le support 12 suivant son épaisseur. De préférence, autant de fenêtres 15 que d'entretoises 20 traverse le support 12. Chacune des fenêtres 15 définit un espaces vide à l'intérieur du support 12. Les fenêtres 15 peuvent être régulièrement réparties sur toute la circonférence du support 12. Chaque entretoise 20 peut traverser une fenêtre 15. Chaque entretoise 20 peut être intégralement reçu dans l'épaisseur de la fenêtre 15.

Le dispositif 10 comprend en outre au moins un organe de roulement 40, par exemple un rouleau. Chaque corps pendulaire 13 est classiquement monté oscillant sur le support 12, par exemple au moyen d'un unique organe de roulement 40.

De préférence, chaque corps pendulaire 13 est monté oscillant sur le support 12 au moyen de deux organe de roulement 40. Deux organes de roulement 40 peuvent traverser une unique fenêtre 15 du support 12 et guident le mouvement des masses oscillantes 14 d'un corps pendulaire 13 par rapport au support 12. Alternativement, chaque organe de roulement 40 peut respectivement traverser une fenêtre 15 du support et guide le mouvement des masses oscillantes 14 par rapport au support 12.

Chaque organe de roulement 40 peut rouler sur une piste de roulement de support 41, solidaire du support 12 lorsque le corps pendulaire 13 est supporté par la force centrifuge. Chaque organe de roulement 40 peut rouler sur une piste de roulement de corps pendulaire 42, solidaire du corps pendulaire 13, lorsque le corps pendulaire 13 est supporté par la force centrifuge. Les bords des fenêtres 15, en particulier les parties radialement externes desdits bords, peuvent définir les pistes de roulement de support 41. L'entretoise 20 peut former la piste de roulement de corps pendulaire 42 ou les pistes de roulement de corps pendulaire 42 lorsque deux organes de roulement 40 sont dans une même fenêtre 15. Plus particulièrement, la face supérieure 21 radialement externe de l'entretoise 20 peut former la ou les piste(s) de roulement de corps pendulaire 42.

La forme des pistes de roulement de support 41 et de corps pendulaire 42 peut être telle que chaque corps pendulaire 13 soit déplacé par rapport au support 12 à la fois : en translation autour d'un axe fictif parallèle à l'axe X de rotation du support 12 et, également en rotation autour du centre de gravité dudit corps pendulaire 13, un tel mouvement étant encore appelé « mouvement combiné » et divulgué par exemple dans la demande DE 10 2011 086 532.

En variante, la forme des pistes de roulement de support 41 et de corps pendulaire 42 précitées peut être telle que chaque corps pendulaire 13 soit uniquement déplacé par rapport au support 12 en translation autour d'un axe fictif parallèle à l'axe X de rotation du support 12.

Chaque organe de roulement 40 peut être monté librement dans une fenêtre 15 du support 12. Chaque organe de roulement 40 peut présenter une surface de roulement 43, adaptée pour être au moins partiellement au contact de la piste de roulement de support 41 et de la piste de roulement de corps pendulaire 42.

Chaque organe de roulement 40 peut être uniquement sollicité en compression entre la piste de roulement de corps pendulaire 42 et la piste de roulement de support 41. La piste de roulement de corps pendulaire 42 et la piste de roulement de support 41 coopérant avec un même organe de roulement 40 peuvent être au moins en partie radialement en regard, c'est-à-dire qu'il existe des plans perpendiculaires à l'axe X de rotation dans lesquels ces pistes de roulement s'étendent toutes les deux.

Chaque organe de roulement 40 peut coopérer avec la piste de roulement de corps pendulaire 42 et avec la piste de roulement de support 41 uniquement via sa surface de roulement 43 extérieure.

Toutes les pistes de roulement de corps pendulaire 42 peuvent avoir exactement la même forme entre elles et/ou toutes les pistes de roulement de support 41 peuvent avoir exactement la même forme entre elles.

Les corps pendulaires 13 sont de préférence répartis équi-angulairement autour de l'axe X. De préférence, leur nombre est égal à deux. Leur nombre peut être inférieur à quatre. Tous les corps pendulaires 13 peuvent se succéder circonférentiellement. Le dispositif 10 peut ainsi comprendre une pluralité de plans perpendiculaires à l'axe X de rotation dans chacun desquels tous les corps pendulaires 13 sont disposés.

Le dispositif 10 comprend en outre au moins un amortisseur de butée 50. L'amortisseur de butée 50 peut être réalisé dans un matériau élastique. Le matériau élastique peut être un élastomère ou du caoutchouc. Les propriétés élastiques présentées par l'amortisseur de butée 50 peuvent permettre l'amortissement des chocs liés à la venue en contact du corps pendulaire 13 et du support 12. L'amortisseur de butée 50 peut être situé sur une des extrémités circonférentielles de l'entretoise 20.

Un procédé de fabrication du dispositif 10 d'amortissement pendulaire peut comprendre une étape d'assemblage de la première et de la deuxième masses oscillantes 14 sur le support 12.

Les première et de la deuxième masses oscillantes 14 du corps pendulaire 13 sont fabriquées le plus souvent au cours d'une étape préliminaire à partir d'une tôle métallique. Lors de cette étape préliminaire, le ou les premiers évidements 141 et le ou les troisièmes évidements 143 peuvent être réalisés par poinçonnage.

Au cours de l'étape préliminaire, le ou les deuxièmes évidements 202 peuvent en outre être réalisés sur la ou les entretoises 20 par poinçonnage.

Cette étape préliminaire permet de réaliser facilement des évidements cylindriques présentant un diamètre prédéterminé. Les premiers, deuxièmes et troisièmes évidements peuvent présenter le même diamètre et être réalisés par le même outillage ce qui facilite et réduit les coûts de fabrication.

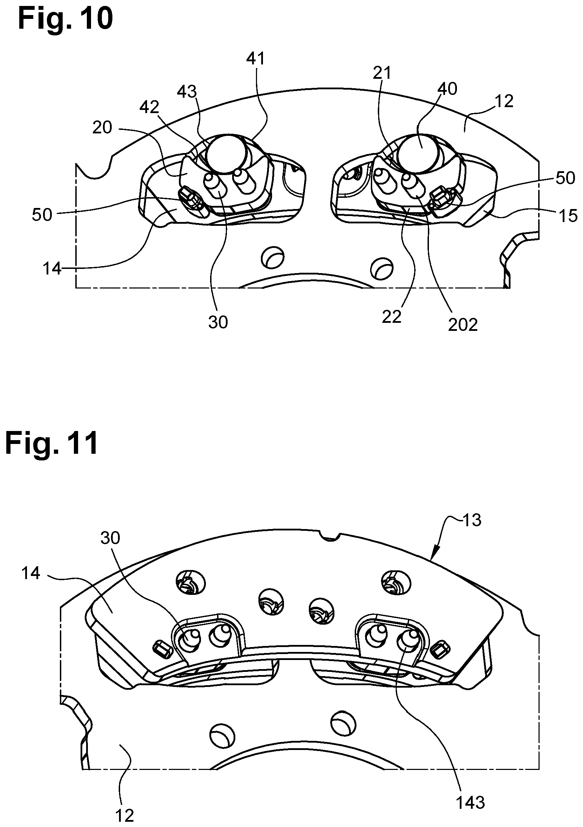

L'ensemble comprenant la première masse oscillante 14, la deuxième masse oscillante 14 et, comme dans l'exemple représenté sur la figure 10, deux entretoises 20 ainsi préparés peuvent être assemblés sur le support 12 au cours de l'étape d'assemblage.

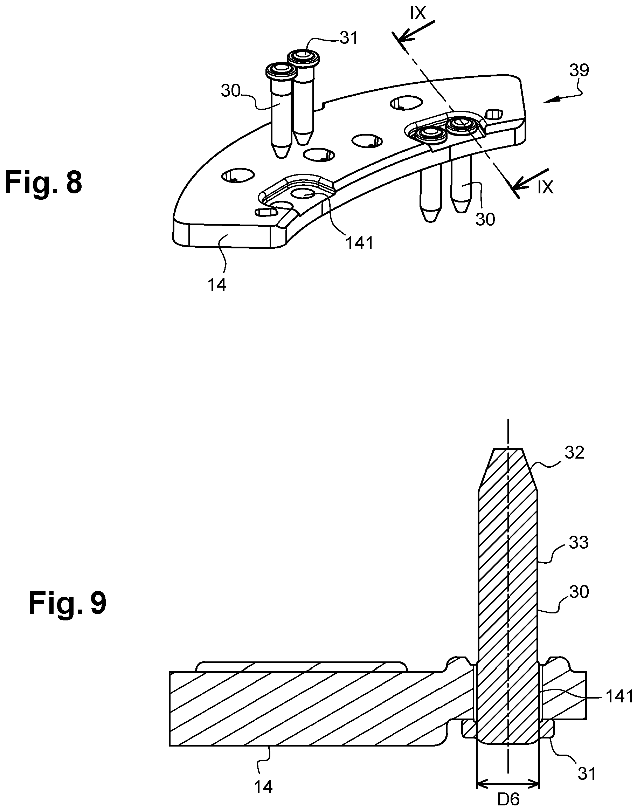

Dans le procédé de fabrication selon l'invention, cette étape d'assemblage comprend une première séquence d'insertion, comme représenté sur les figures 8 et 9, d'un rivet 30 dans chacun des premiers évidements du premier élément. Ici, le rivet 30 peut être inséré dans chacun des premiers évidement 141 de la première masse oscillante 14. La première portion 34 du corps 33 de chaque rivet 30 peut être au contact avec la paroi intérieure de chacun des premiers évidements 141. Le contact peut être avec un jeu faible. La présence d'un faible jeu peut être suffisant pour permettre une bonne liaison entre le premier élément etle rivet 30. De préférence, le contact est sans jeu. La surface extérieure de la première portion 34 du corps 33 du rivet 30 peut être au contact de la paroi intérieure du premier évidement 141. Alternativement, lorsque le rivet 30 comprend une ou des cannelures 37, le sommet des nervures présentes sur les bords de la ou des cannelures 37 peut être au contact de la paroi intérieure du premier évidement 141. Le taux de remplissage de chacun premier évidement 141 par un des rivets 30 est supérieur à 50%, de préférence supérieur à 80%, ce qui est un gage d'une bonne tenue du corps pendulaire 13 en centrifugation et pour la tenue aux chocs. Le ou les rivets 30 et la première masse oscillante 14 sont rigidement solidaire et forment un sous-ensemble. La première longueur axiale L1 de la première portion peut être égale à l'épaisseur du premier évidement 141. La tête 31 de chaque rivet 30 peut être au contact de la première masse oscillante 14.

L'étape d'assemblage du procédé de fabrication selon l'invention peut en outre comprendre une seconde séquence d'insertion du support 12. Le sous-ensemble est inséré sur le support 12. La première masse oscillante 14 est au contact de l'une des faces latérales 16 du support et les rivets 30 passent par au moins une des fenêtres 15 du support 12, comme visible sur la figure 10.

L'étape d'assemblage du procédé de fabrication selon l'invention peut en outre comprendre une troisième séquence d'insertion du deuxième élément. Ici des entretoises 20 sur les rivets 30. La deuxième portion 35 du corps 33 de chacun des rivets 30 peut être inséré avec jeu dans chacun des deuxièmes évidements 202 afin de facilité le montage des entretoises 20.

Au cours de cette troisième séquence d'insertion, il est en outre possible d'ajouter les amortisseurs de butée 50 sur les entretoises 20.

La seconde et la troisième séquence d'insertion peuvent être interverties.

L'étape d'assemblage du procédé de fabrication selon l'invention peut en outre comprendre une quatrième séquence d'insertion des organes de roulement 40. Chacun des organes de roulement 40 est inséré entre une piste de roulement de support 41 et une piste de roulement de corps pendulaire 42 dans une des fenêtres 15 du support 12, comme visible sur la figure 10.

L'étape d'assemblage du procédé de fabrication selon l'invention peut en outre comprendre une cinquième séquence d'insertion du troisième élément, ici la deuxième masse oscillante 14. La deuxième portion 35 du corps 33 de chacun des rivets 30 peut être inséré avec jeu dans chacun des troisièmes évidements 143, comme visible sur la figure 11, afin de faciliter le montage de la deuxième masse oscillante 14.

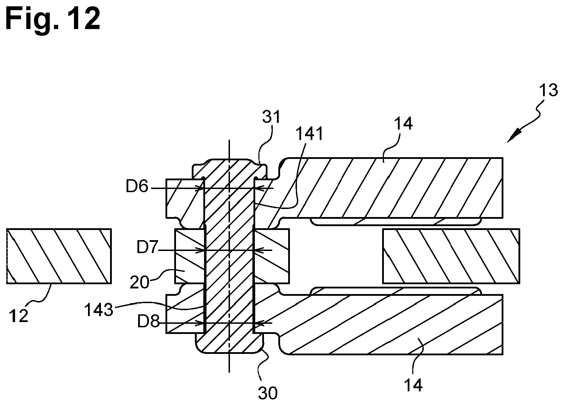

Le procédé de fabrication comprend une étape de déformation du pied 32 de chacun des rivets 30, comme visible à la figure 12. Cette déformation permet de rigidement solidariser entre eux les première et deuxième masses oscillantes et les entretoises 20. Cette déformation permet de réduire le jeu présent entre la deuxième portion 35 du corps 33 de chacun des rivets 30 et l'intérieur des troisièmes évidements 143. Cette réduction du jeu permet d'obtenir un taux de remplissage de chacun troisième évidement 143 par un des rivets 30 supérieur à 50%, de préférence supérieur à 80%, ce qui est un gage d'une bonne tenue du corps pendulaire 13 en centrifugation et pour la tenue aux chocs.

Les différentes étapes du procédé de fabrication peuvent être exécutées à froid.

Selon l'alternative dans laquelle la première portion 34 du corps 33 du rivet 30 est axialement au contact du pied 32 et la deuxième portion 35 du corps 33 du rivet 30 est axialement au contact de la tête 31, le premier élément peut être la deuxième masse oscillante 14 appartenant audit corps pendulaire 13, le deuxième élément peut être l'organe de liaison et le troisième élément peut être la première masse oscillante 14. En outre, les étapes d'insertion du procédé de fabrication s'enchainent ainsi : cinquième séquence, seconde séquence, troisième séquence, quatrième séquence et première séquence.

Lors de la cinquième séquence, la tête 31 de chaque rivet 30 peut être au contact de la première masse oscillante 14 et la deuxième portion 35 du corps 33 de chaque rivet 30 peut être inséré avec jeu dans chacun des évidements de la première masse oscillante 14.

Lors de la première séquence, la première portion 34 du corps 33 de chaque rivet 30 peut être au contact, sans jeu ou avec un faible jeu, avec la paroi intérieure de chacun des évidements de la deuxième masse 14.

Selon l'alternative dans laquelle la première portion 34 du corps 33 du rivet 30 est axialement située entre deux deuxième portions 35 du corps 33 du rivet 30, le premier élément peut être l'organe de liaison, le deuxième élément peut être la première masse oscillante 14 et le troisième élément peut être la deuxième masse oscillante 14. En outre, les étapes d'insertion du procédé de fabrication s'enchainent ainsi : troisième séquence, seconde séquence, première séquence, quatrième séquence et cinquième séquence.

Lors de la troisième séquence, la tête 31 de chaque rivet 30 peut être au contact de la première masse oscillante 14 et la première deuxième portion 35 du corps 33 de chaque rivet 30 peut être inséré avec jeu dans chacun des évidements de la première masse oscillante 14.

Lors de la première séquence, la première portion 34 du corps 33 de chaque rivet 30 peut être au contact, sans jeu ou avec un faible jeu, avec la paroi intérieure de chacun des évidements de l'entretoise 20.

Lors de la cinquième séquence, la deuxième deuxième portion 35 du corps 33 de chaque rivet 30 peut être inséré avec jeu dans chacun des évidements de la deuxième masse oscillante 14.

Bien entendu, l'invention n'est pas limitée aux modes de réalisation décrits et représentés, fournis à des fins illustratives uniquement. Les différents modes de réalisation pourraient également être combinés.

## Revendications

1. Ensemble, notamment un corps pendulaire (13) pour un dispositif (10) d'amortissement pendulaire destiné à équiper une transmission d'un véhicule, avant montage, comprenant:
- un premier élément présentant un premier évidement (141) avec un sixième diamètre (D6),
- un troisième élément présentant un troisième évidement (143) avec un huitième diamètre (D8), le huitième diamètre (D8) étant identique au sixième diamètre (D6) du premier évidement (141) du premier élément.
- un rivet (30) s'étendant axialement entre une tête (31) et un pied (32) et comprenant un corps (33) situé axialement entre la tête et le pied,
ledit corps du rivet comprenant une première portion (34), présentant un premier diamètre (D1), et une deuxième portion (35), présentant un deuxième diamètre (D2) inférieur au premier diamètre (D1),
et dans lequel le premier diamètre (D1) de la première portion (34) du corps (33) du rivet est égale au sixième diamètre (D6) du premier évidement (141) du premier élément.

2. Ensemble selon la revendication 1, dans lequel la tête (31) du rivet (30) présente un quatrième diamètre (D4) supérieur au premier diamètre (D1), et dans lequel la première portion (34) du rivet (30) est axialement au contact de la tête (31) et la deuxième portion (35) du rivet (30) est axialement au contact du pied (32).

3. Ensemble selon la revendication 1, dans lequel la tête (31) du rivet (30) présente un quatrième diamètre (D4) supérieur au premier diamètre (D1), et dans lequel la première portion (34) du rivet (30) est axialement au contact du pied (32) et la deuxième portion (35) du rivet (30) est axialement au contact de la tête (31).

4. Ensemble selon la revendication 1, dans lequel le corps (33) du rivet (30) comprend deux deuxième portions (35), la première portion (34) du rivet (30) étant située axialement entre les deux deuxième portions (35).

5. Ensemble selon l'une quelconque des revendications précédentes, dans lequel le corps (33) du rivet (30) comprend en outre une portion intermédiaire (36) située axialement entre la première portion (34) et la deuxième portion (35) du rivet (30), la portion intermédiaire (36) présentant un troisième diamètre (D3) compris entre le deuxième diamètre (D2) et le premier diamètre (D1).

6. Ensemble selon l'une quelconque des revendications précédentes, dans lequel la première portion (34) du corps (33) du rivet (30) comprend une cannelure (37).

7. Ensemble selon l'une quelconque des revendications précédentes, comprenant en outre un deuxième élément présentant un deuxième évidement (202) avec un septième diamètre (D7), le deuxième diamètre (D2) de la deuxième portion (35) du corps (33) du rivet (30) étant inférieur audit septième diamètre (D7).

8. Procédé de fabrication d'un ensemble selon l'une quelconque des revendications précédentes, comprenant les étapes suivantes :
- Amener un premier élément présentant un premier évidement (141) avec un sixième diamètre (D6),
- Amener un rivet (30) s'étendant axialement entre une tête (31) et un pied (32) et comprenant un corps (33) situé axialement entre la tête et le pied, ledit corps comprenant une première portion (34) présentant un premier diamètre (D1), le premier diamètre (D1) étant égale audit sixième diamètre (D6), et une deuxième portion (35) présentant un deuxième diamètre (D2) inférieur au premier diamètre (D1),
- Apparier le premier élément au rivet (30) en insérant la première portion (34) du corps dudit rivet dans le premier évidement (141) dudit premier élément
- Amener un troisième élément présentant un troisième évidement (143) avec un huitième diamètre (D8) identique au sixième diamètre (D6) du premier évidement (141) du premier élément,
- Insérer la deuxième portion (35) du corps du rivet dans le troisième évidement (143),
- Déformer le pied (32) du rivet pour apparier le premier élément au troisième élément de sorte que la deuxième portion (35) du corps du rivet se déforme pour remplir le troisième évidement.

9. Procédé selon la revendication précédente, dans lequel le premier élément est une première masse oscillante (14) et le troisième élément est une deuxième masse oscillante (14) d'un corps pendulaire (13) d'un dispositif (10) d'amortissement pendulaire, notamment destiné à équiper une transmission d'un véhicule.

10. Procédé selon l'une quelconque des deux revendications précédentes, comprenant en outre, entre la troisième étape et la quatrième étape de la revendication 8, les étapes consistant à :
- Amener un deuxième élément présentant un deuxième évidement (202) avec un septième diamètre (D7) supérieur au deuxième diamètre (D2) de la deuxième portion (35) du corps (33) du rivet (30),
- Insérer la deuxième portion (35) du corps du rivet dans le deuxième évidement (202),
- La dernière étape de la revendication 8 consistant à déformer le pied (32) du rivet pour apparier le premier élément au deuxième élément et au troisième élément de sorte que la deuxième portion (35) du corps du rivet se déforme pour remplir le deuxième évidement et le troisième évidement.

11. Procédé selon la revendication précédente, dans lequel le deuxième élément est un organe de liaison (20) appartenant au corps pendulaire (13) adapté pour apparier la première masse oscillante à la deuxième masse oscillante.

## Patentansprüche

1. Anordnung, insbesondere ein Pendularkörper (13) für eine Pendulardämpfungsvorrichtung (10) zur Ausstattung eines Fahrzeuggetriebes, vor der Montage, umfassend:
- ein erstes Element mit einer ersten Aussparung (141) mit einem sechsten Durchmesser (D6),
- ein drittes Element mit einer dritten Aussparung (143) mit einem achten Durchmesser (D8), wobei der achte Durchmesser (D8) identisch mit dem sechsten Durchmesser (D6) der ersten Aussparung (141) des ersten Elements ist.
- eine Niete (30), die sich axial zwischen einem Kopf (31) und einem Fuß (32) erstreckt und einen Körper (33) umfasst, der axial zwischen dem Kopf und dem Fuß angeordnet ist,
wobei der Körper der Niete einen ersten Abschnitt (34) mit einem ersten Durchmesser (D1) und einen zweiten Abschnitt (35) mit einem zweiten Durchmesser (D2), der kleiner als der erste Durchmesser (D1) ist, umfasst,
und wobei der erste Durchmesser (D1) des ersten Abschnitts (34) des Körpers (33) der Niete gleich dem sechsten Durchmesser (D6) der ersten Aussparung (141) des ersten Elements ist.

2. Anordnung nach Anspruch 1, wobei der Kopf (31) der Niete (30) einen vierten Durchmesser (D4) aufweist, der größer als der erste Durchmesser (D1) ist, und wobei der erste Abschnitt (34) der Niete (30) axial mit dem Kopf (31) in Kontakt steht und der zweite Abschnitt (35) der Niete (30) axial mit dem Fuß (32) in Kontakt steht.

3. Anordnung nach Anspruch 1, wobei der Kopf (31) der Niete (30) einen vierten Durchmesser (D4) aufweist, der größer als der erste Durchmesser (D1) ist, und wobei der erste Abschnitt (34) der Niete (30) axial mit dem Fuß (32) in Kontakt steht und der zweite Abschnitt (35) der Niete (30) axial mit dem Kopf (31) in Kontakt steht.

4. Anordnung nach Anspruch 1, wobei der Körper (33) der Niete (30) zwei zweite Abschnitte (35) umfasst, wobei der erste Abschnitt (34) der Niete (30) axial zwischen den beiden zweiten Abschnitten (35) angeordnet ist.

5. Anordnung nach einem der vorhergehenden Ansprüche, wobei der Körper (33) der Niete (30) ferner einen Zwischenabschnitt (36) umfasst, der axial zwischen dem ersten Abschnitt (34) und dem zweiten Abschnitt (35) der Niete (30) angeordnet ist, wobei der Zwischenabschnitt (36) einen dritten Durchmesser (D3) aufweist, der zwischen dem zweiten Durchmesser (D2) und dem ersten Durchmesser (D1) liegt.

6. Anordnung nach einem der vorhergehenden Ansprüche, wobei der erste Abschnitt (34) des Körpers (33) der Niete (30) eine Rille (37) umfasst.

7. Anordnung nach einem der vorhergehenden Ansprüche, ferner umfassend ein zweites Element mit einer zweiten Aussparung (202) mit einem siebten Durchmesser (D7), wobei der zweite Durchmesser (D2) des zweiten Abschnitts (35) des Körpers (33) der Niete (30) kleiner als der siebte Durchmesser (D7) ist.

8. Verfahren zur Herstellung einer Anordnung nach einem der vorhergehenden Ansprüche, umfassend die folgenden Schritte:
- Bereitstellen eines ersten Elements mit einer ersten Aussparung (141) mit einem sechsten Durchmesser (D6),
- Bereitstellen einer Niete (30), die sich axial zwischen einem Kopf (31) und einem Fuß (32) erstreckt und einen Körper (33) umfasst, der axial zwischen dem Kopf und dem Fuß angeordnet ist, wobei der Körper einen ersten Abschnitt (34) mit einem ersten Durchmesser (D1), wobei der erste Durchmesser (D1) gleich dem sechsten Durchmesser (D6) ist, und einen zweiten Abschnitt (35) mit einem zweiten Durchmesser (D2), der kleiner als der erste Durchmesser (D1) ist, umfasst,
- Verbinden des ersten Elements mit der Niete (30) durch Einsetzen des ersten Abschnitts (34) des Körpers der Niete in die erste Aussparung (141) des ersten Elements.
- Bereitstellen eines dritten Elements mit einer dritten Aussparung (143) mit einem achten Durchmesser (D8), der identisch mit dem sechsten Durchmesser (D6) der ersten Aussparung (141) des ersten Elements ist,
- Einsetzen des zweiten Abschnitts (35) des Körpers der Niete in die dritte Aussparung (143),
- Verformen des Fußes (32) der Niete, um das erste Element mit dem dritten Element zu verbinden, sodass sich der zweite Abschnitt (35) des Körpers der Niete verformt, um die dritte Aussparung auszufüllen.

9. Verfahren nach dem vorhergehenden Anspruch, wobei das erste Element eine erste Schwungmasse (14) und das dritte Element eine zweite Schwungmasse (14) eines Pendularkörpers (13) einer Pendulardämpfungsvorrichtung (10) ist, insbesondere zur Ausstattung eines Fahrzeuggetriebes.

10. Verfahren nach einem der beiden vorhergehenden Ansprüche, ferner umfassend, zwischen dem dritten Schritt und dem vierten Schritt des Anspruchs 8, die Schritte:
- Bereitstellen eines zweiten Elements mit einer zweiten Aussparung (202) mit einem siebten Durchmesser (D7), der größer als der zweite Durchmesser (D2) des zweiten Abschnitts (35) des Körpers (33) der Niete (30) ist,
- Einsetzen des zweiten Abschnitts (35) des Körpers der Niete in die zweite Aussparung (202),
- wobei der letzte Schritt des Anspruchs 8 darin besteht, den Fuß (32) der Niete zu verformen, um das erste Element mit dem zweiten Element und dem dritten Element zu verbinden, sodass sich der zweite Abschnitt (35) des Körpers der Niete verformt, um die zweite Aussparung und die dritte Aussparung auszufüllen.

11. Verfahren nach dem vorhergehenden Anspruch, wobei das zweite Element ein Verbindungsorgan (20) ist, das zum Pendularkörper (13) gehört und angepasst ist, um die erste Schwungmasse mit der zweiten Schwungmasse zu verbinden.

## Claims

1. Assembly, in particular a pendulum body (13) for a pendulum damping device (10) intended to equip a vehicle transmission, before assembly, comprising:
- a first element having a first recess (141) with a sixth diameter (D6),
- a third element having a third recess (143) with an eighth diameter (D8), the eighth diameter (D8) being identical to the sixth diameter (D6) of the first recess (141) of the first element.
- a rivet (30) extending axially between a head (31) and a foot (32) and comprising a body (33) located axially between the head and the foot,
said rivet body comprising a first portion (34), having a first diameter (D1), and a second portion (35), having a second diameter (D2) less than the first diameter (D1),
and wherein the first diameter (D1) of the first portion (34) of the body (33) of the rivet is equal to the sixth diameter (D6) of the first recess (141) of the first element.

2. Assembly according to claim 1, wherein the head (31) of the rivet (30) has a fourth diameter (D4) greater than the first diameter (D1), and wherein the first portion (34) of the rivet (30) is axially in contact with the head (31) and the second portion (35) of the rivet (30) is axially in contact with the foot (32).

3. Assembly according to claim 1, wherein the head (31) of the rivet (30) has a fourth diameter (D4) greater than the first diameter (D1), and wherein the first portion (34) of the rivet (30) is axially in contact with the foot (32) and the second portion (35) of the rivet (30) is axially in contact with the head (31).

4. Assembly according to claim 1, wherein the body (33) of the rivet (30) comprises two second portions (35), the first portion (34) of the rivet (30) being located axially between the two second portions (35).

5. Assembly according to any one of the preceding claims, wherein the body (33) of the rivet (30) further comprises an intermediate portion (36) located axially between the first portion (34) and the second portion (35) of the rivet (30), the intermediate portion (36) having a third diameter (D3) between the second diameter (D2) and the first diameter (D1).

6. Assembly according to any one of the preceding claims, wherein the first portion (34) of the body (33) of the rivet (30) comprises a groove (37).

7. Assembly according to any one of the preceding claims, further comprising a second element having a second recess (202) with a seventh diameter (D7), the second diameter (D2) of the second portion (35) of the body (33) of the rivet (30) being less than said seventh diameter (D7).

8. Method of manufacturing an assembly according to any one of the preceding claims, comprising the following steps:
- Providing a first element having a first recess (141) with a sixth diameter (D6),
- Providing a rivet (30) extending axially between a head (31) and a foot (32) and comprising a body (33) located axially between the head and the foot, said body comprising a first portion (34) having a first diameter (D1), the first diameter (D1) being equal to said sixth diameter (D6), and a second portion (35) having a second diameter (D2) less than the first diameter (D1),
- Pairing the first element with the rivet (30) by inserting the first portion (34) of the body of said rivet into the first recess (141) of said first element.
- Providing a third element having a third recess (143) with an eighth diameter (D8) identical to the sixth diameter (D6) of the first recess (141) of the first element,
- Inserting the second portion (35) of the rivet body into the third recess (143),
- Deforming the foot (32) of the rivet to pair the first element with the third element so that the second portion (35) of the rivet body deforms to fill the third recess.

9. Method according to the preceding claim, wherein the first element is a first oscillating mass (14) and the third element is a second oscillating mass (14) of a pendulum body (13) of a pendulum damping device (10), in particular intended to equip a vehicle transmission.

10. Method according to any one of the two preceding claims, further comprising, between the third step and the fourth step of claim 8, the steps of:
- Providing a second element having a second recess (202) with a seventh diameter (D7) greater than the second diameter (D2) of the second portion (35) of the body (33) of the rivet (30),
- Inserting the second portion (35) of the rivet body into the second recess (202),
- The last step of claim 8 consisting of deforming the foot (32) of the rivet to pair the first element with the second element and the third element so that the second portion (35) of the rivet body deforms to fill the second recess and the third recess.

11. Method according to the preceding claim, wherein the second element is a connecting member (20) belonging to the pendulum body (13) adapted to pair the first oscillating mass with the second oscillating mass.
